# EUROPÄISCHE PATENTANMELDUNG

(11) **EP 4 566 943 A1**
(43) Veröffentlichungstag der Anmeldung: **11.06.2025**
(21) Anmeldenummer: 24206592.8
(22) Anmeldetag: 15.10.2024
(51) Int. Cl.: B64C 13/00, B64C 13/42, B64C 13/50

(54) **STEUEREINHEIT, SYSTEM UND VERFAHREN**

(30) Priorität: 05.12.2023 DE 102023133936
(71) Anmelder: Liebherr-Aerospace Lindenberg GmbH, 88161 Lindenberg (DE)
(72) Erfinder: KOHLÖFFEL, Christian, 88279 Amtzell (DE); MANGLER, Werner, 88299 Leutkirch (DE)
(74) Vertreter: Herrmann, Uwe

(57) **Zusammenfassung**

Die vorliegende Erfindung betrifft eine Steuereinheit, zur Ansteuerung von mindestens zwei Komponenten eines Luftfahrzeugs, mit einem Steuerteil und einem Schaltteil, wobei das Steuerteil und das Schaltteil derart ausgebildet sind, dass die Komponenten sequenziell angesteuert werden können, wobei zu einem Zeitpunkt nur eine der Komponenten angesteuert werden kann oder dass mindestens zwei Komponenten nicht gleichzeitig angesteuert werden können.

## Beschreibung

Die vorliegende Erfindung betrifft eine Steuereinheit, zur Ansteuerung von mindestens zwei Komponenten eines Luftfahrzeugs, mit einem Steuerteil und einem Schaltteil.

Es ist bekannt, dass an einem Luftfahrzeug, insbesondere an einem Flugzeug, mechanische Auftriebshilfen zur Erweiterung des Geschwindigkeitsspektrums des Luftfahrzeugs vorhanden sind bzw. verwendet werden. Mechanische Auftriebshilfen sind bspw. Klappen, insbesondere Vorflügel und Landeklappen, die in unterschiedlichen Konstruktionen ausgeführt sein können. Durch Betätigung dieser Klappen kann der Auftrieb speziell in der Start- und Landephase des Luftfahrzeugs den jeweils herrschenden Anforderungen angepasst werden. Das Ausfahren dieser Klappen führt zu einer Vergrößerung der Flügelfläche bzw. der Wölbung des Flügelprofils und ermöglicht somit ausreichende Auftriebsgenerierung im niedrigen Geschwindigkeitsbereich bzw. ermöglicht höhere Anstellwinkel des Flügels bzw. der Tragfläche. Landeklappen werden üblicherweise nach hinten unten aus dem Flügel ausgefahren. Die Vorflügel werden üblicherweise nach vorne aus dem Flügel ausgefahren.

Bei der Verwendung von Krügerklappen bzw. "leading edge flap devices", wie dies z.B. bei der Boeing 747 der Fall ist, dürfen nicht alle Krügerklappen gleichzeitig ausgefahren werden, da es während einem gleichzeitigen Durchfahren aller Krügerklappen von der vollständig eingefahrenen zur vollständig ausgefahrenen Position zu ungünstigen Strömungsverhältnissen bis hin zu einem Strömungsabriss kommen kann. Daher weist z.B. die Boeing 747 Einzelkappenantreibe, welche elektrisch synchronisiert und pneumatisch betrieben werden, auf, wie dies bspw. aus der NASA-CR-4746, 1996 hervorgeht.

Bei neueren Flügelkonfigurationen, welche ebenfalls laminar oder hybrid laminar angeströmt werden, sind ähnliche Problemstellung vorhanden. Im Unterschied zur Boeing 747 geht der Trend bei neueren Flugzeugen zur Verwendung von elektrisch angetriebenen Klappen oder auch weiterhin zur Verwendung von hydraulisch angetriebenen und elektronisch gesteuerten und kontrollierten Klappen.

Nach dem Stand der Technik werden Klappen einer mechanischen Auftriebshilfe z.B. pneumatisch, hydraulisch oder auch elektrisch angetrieben. Der Stand der Technik bei elektrisch oder auch hydraulisch angetriebenen Klappen ist derart, dass pro Klappe oder pro Antriebsstation einer Klappe mindesten eine Leistungs- und/oder Signalelektronik bspw. in Form einer Motorsteuerung bzw. einer "motion control engine" (MCE) oder ein Steuerventilblock vorhanden bzw. installiert ist und diese jeweils permanent mit jeweils einem Motor und/oder hydraulischen Stellglied verbunden sind. Jeder Motor oder jedes Stellglied weist somit eine eigene Leistungs-und/oder Signalelektronik und/oder einen eigenen Steuerventilblock auf.

Die Nachteile des Stands der Technik bestehen unter anderem darin, dass für jeden angetriebenen Motor oder für jedes hydraulische Stellglied eine Leistungs- und/oder Signalelektronik oder ein Steuerventilblock benötigt wird und somit eine hohe Anzahl an Leistungs- und/oder Signalelektroniken bzw. Steuerventilblöcken, insbesondere in einem Krügerklappensystem, nötig sind, da eine Leistungs- und/oder Signalelektronik oder ein Steuerventilblock jeweils nur einen Motor oder ein hydraulisches Stellglied ansteuern kann.

Vor diesem Hintergrund liegt der vorliegenden Erfindung die Aufgabe zugrunde, eine gegenüber dem Stand der Technik verbesserte Steuereinheit bereitzustellen.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass das Steuerteil und das Schaltteil derart ausgebildet sind, dass die Komponenten sequenziell angesteuert werden können, wobei zu einem Zeitpunkt nur eine der Komponenten angesteuert werden kann oder dass mindestens zwei Komponenten nicht gleichzeitig angesteuert werden können.

Alternativ oder zusätzlich kann vorzugsweise vorgesehen sein, dass zu einem Zeitpunkt mehrere und/oder nicht alle Komponenten angesteuert werden können und/oder nur eine oder mehrere der Komponenten mit der Steuereinheit nicht angesteuert werden können.

Unter "Ansteuern" ist vorzugsweise zu verstehen, dass ein elektrischer, pneumatischer und/oder hydraulischer Signal- und/oder Leistungsfluss von der Steuereinheit und/oder dem Steuerteil an die Komponente fließt. Ansteuern umfasst vorzugsweise auch ein Antreiben.

Der Begriff "Steuern" ist vorzugsweise weit zu verstehen und umfasst bspw. "Steuern" und "Regeln".

Vorzugsweise ist vorgesehen, dass grundsätzlich alle Komponenten mit der Steuereinheit und/oder dem Steuerteil angesteuert werden können, wobei jeweils zu einem Zeitpunkt eine der Komponenten angesteuert werden kann und alle oder mindestens eine der anderen Komponenten nicht.

Die Steuereinheit, das Steuerteil und/oder das Schaltteil können vorzugsweise eine Einheit bilden, also bspw. auf einer Leiterplatte angeordnet sein.

Der Begriff "elektrisch" umfasst vorzugsweise elektrisch und/oder elektronisch.

Vorzugsweise erfolgt, insbesondere mittels der Steuereinheit, ein sequenzielles Fahren von Klappen, insbesondere von Vorflügeln und/oder Landeklappen.

Vorzugsweise ist vorgesehen, dass die Steuereinheit eine elektrische, pneumatische und/oder hydraulische Steuereinheit ist und/oder einen Steuerventilblock und/oder eine Leistungs- und/oder Signalelektronik umfasst oder darstellt.

Vorzugsweise ist vorgesehen, dass das Steuerteil ein elektrisches, pneumatisches und/oder hydraulisches Steuerteil ist und/oder ein Pneumatik- und/oder Hydraulikventil und/oder eine Leistungsendstufe umfasst oder darstellt.

Vorzugsweise ist vorgesehen, dass das Schaltteil ein elektrisches, pneumatisches und/oder hydraulisches Schaltteil ist und/oder ein Umschaltventil und/oder einen elektrischen Schalter und/oder Umschalter umfasst oder darstellt.

Vorzugsweise ist vorgesehen, dass eine, mehrere oder alle der Komponenten einen elektrischen, pneumatischen und/oder hydraulischen Antrieb, insbesondere jeweils zur Bewegung eines Aktuators und/oder einer Klappe des Luftfahrzeugs, umfassen oder darstellen.

Der Antrieb kann ein elektrischer, pneumatischer und/oder hydraulischer Motor oder ein elektrisches, pneumatisches und/oder hydraulisches Stellglied, bspw. ein Linearaktuator, sein.

Der Antrieb kann vorzugsweise elektrisch, pneumatisch und/oder hydraulisch angetrieben werden. Die Ansteuerung eines elektrischen Motors erfolgt vorzugsweise durch eine Leistungs- und/oder Signalelektronik. Die Ansteuerung eines hydraulischen Stellglieds erfolgt vorzugsweise durch einen Steuerventilblock, wobei insbesondere ein Auswerteteil in Form einer Signalelektronik verwendet werden kann. Das Auswerteteil kann eine Signalelektronik sein oder umfassen.

Die Leistungs- und/oder Signalelektroniken bzw. der Steuerventilblock kann vorzugsweise mehrere Motoren bzw. hydraulische Stellglieder sequenziell ansteuern, wobei Krügerklappen, also die Klappen einer "leading edge" sequenziell aus- und/oder eingefahren werden können. Die Klappe ist vorzugsweise eine Krügerklappe.

Vorzugsweise ist vorgesehen, dass die Steuereinheit ein Auswerteteil aufweist, wobei das Auswerteteil vorzugsweise derart ausgebildet ist, dass Sensorsignale einer, mehrerer oder aller der Komponenten empfangen und/oder ausgewertet werden können, wobei zu einem Zeitpunkt nur Sensorsignale einer der Komponenten mit dem Auswerteteil empfangen und/oder ausgewertet werden können oder dass mindestens Sensorsignale von zwei Komponenten nicht gleichzeitig empfangen und/oder ausgewertet werden können.

Vorzugsweise ist vorgesehen, dass die Steuereinheit eine zentrale Steuerung aufweist, wobei die zentrale Steuerung derart ausgebildet ist, um das Steuerteil und/oder das Schaltteil anzusteuern.

Vorzugsweise ist vorgesehen, dass die Steuereinheit jeweils mehrere, insbesondere jeweils zwei, Steuerteile und/oder Schaltteile aufweist.

Die Erfindung betrifft auch ein System mit mehreren Komponenten eines Luftfahrzeugs und einer erfindungsgemäßen Steuereinheit.

Das System weist vorzugsweise Krügerklappen auf und ist vorzugsweise ein "Leading Edge System". Das System weist vorzugsweise nicht eine Leistungs- und/oder Signalelektronik bzw. einen Steuerventilblock pro Klappe oder Aktuator auf. Eine Klappe kann mittels eines oder mehrerer Aktuatoren, die wiederum durch einen oder mehrere Antriebe angetrieben werden können, bewegt werden. Das System weist vorzugsweise eine Leistungs- und/oder Signalelektronik bzw. einen Steuerventilblock, mit der bzw. dem mehrere Klappen und/oder Aktuatoren nacheinander, also sequenziell, angetrieben werden können.

Die Erfindung betrifft auch ein Verfahren, insbesondere unter Verwendung einer erfindungsgemäßen Steuereinheit mit dem Schritt:
- Sequenzielles Ansteuern von Komponenten eines Luftfahrzeugs mittels weniger Steuereinheiten als durch die Steuereinheiten angesteuerter Komponenten und vorzugsweise mittels genau einer Steuereinheit.

Vorzugsweise erfolgt eine sequenzielle Ansteuerung einzelner Antriebe und/oder Klappen, insbesondere Krügerklappen. Vorzugsweise erfolgt kein gleichzeitiges Fahren aller Krügerklappen bzw. ein sequenzielles Fahren der Krügerklappen.

In vorteilhafter Weise kann eine gegenüber dem Stand reduzierte Anzahl an Leistungs- und/oder Signalelektroniken oder Ventilblockkomponenten durch Verwendung eines Schaltteils bzw. eines Umschalters verwendet werden, um einzelne Klappen sequenziell anzusteuern.

Es ist denkbar, dass zwei oder mehrere Klappen und/oder Aktuatoren gleichzeitig angesteuert bzw. angetrieben werden oder werden können, doch zumindest zwei oder mehrere Klappen und/oder Aktuatoren nicht gleichzeitig angesteuert bzw. angetrieben werden oder werden können.

Durch die Reduzierung der Anzahl an nötigen Leistungs- und/oder Signalelektroniken oder Steuerventilblöcken gegenüber dem Stand der Technik, insbesondere auf die mindestens benötigte Anzahl für gleichzeitig zu fahrende Aktuatoren und/oder Klappenpaare, können folgende Vorteile erzielt werden:
- Reduziertes Gewicht;
- Reduzierte Kosten;
- Erhöhte Verfügbarkeit;
- Reduzierung des Einbauraums.

Vorzugsweise erfolgt eine sequenzielle Ansteuerung mehrerer Antriebe mittels einer Leistungs- und/oder Signalelektronik, die ein Schaltteil, bspw. umschaltbare Bestandteile, aufweist.

Vorzugsweise sind die Bestandteile der Leistungs- und/oder Signalelektronik jeweils nur einmal in der Leistungs- und/oder Signalelektronik vorhanden und werden sequenziell verwendet, um ähnliche Antriebe anzutreiben bzw. zu betätigen.

Vorzugsweise sind die Bestandteile des Steuerventilblocks jeweils nur einmal in dem Steuerventilblock vorhanden und werden sequenziell verwendet, um hydraulischen Stellantriebe anzutreiben bzw. zu betätigen.

Vorzugsweise ist das Auswerteteil, z.B. eine Signalelektronikauswertung, nur einmal vorhanden und wird sequenziell verwendet, um mehrere Sensoren von ähnlichen Antrieben auszuwerten.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigt:
- Fig. 1:: eine schematische Darstellung einer Ausführungsform eines erfindungsgemäßen Systems.
- Fig. 2:: eine schematische Darstellung einer Ausführungsform eines erfindungsgemäßen Systems.
- Fig. 3:: eine schematische Darstellung einer Ausführungsform eines erfindungsgemäßen Systems.

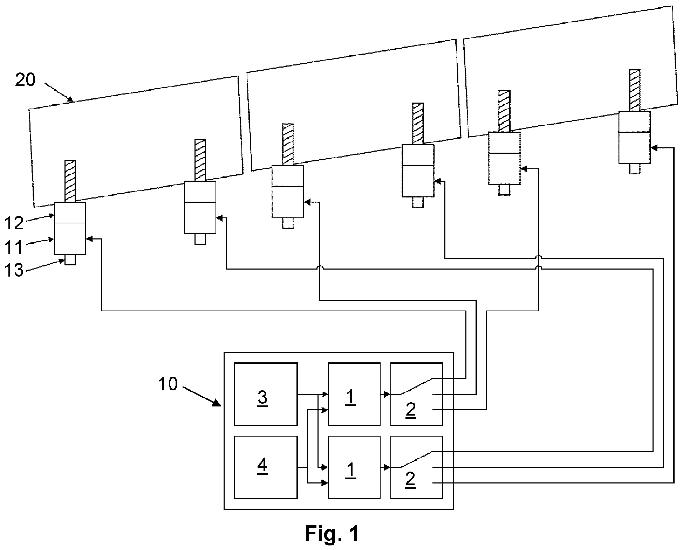

In Fig. 1 ist ein System mit einer Steuereinheit 10 und mehreren Klappen 20, wobei die Klappen 20 Krügerklappen sein können, dargestellt.

Die Steuereinheit 10 weist zwei Steuerteile 1 in Form von Leistungsendstufen und zwei Schaltteile 2 in Form von elektrischen Schaltern auf. Die Steuereinheit 10 weist eine zentrale Steuerung 3 und ein Auswerteteil 4 auf.

Die Steuerteile 1 und/oder die Schaltteile 2 werden von der zentralen Steuerung 3 angesteuert oder können angesteuert werden.

An jeder Klappe 20 sind zwei Antriebsstationen mit jeweils einem Motor 11, einer Bremse 12 und einer Sensorik 13 angeordnet. Diese Antriebsstationen treiben die Klappe an und bewegen diese.

Wie dies aus den Verbindungslinien zwischen den Motoren 11 und den Schaltteilen 2 ersichtlich ist, kann eine Leistungsendstufe 1 jeweils einen Motor 11 einer Antriebsstation einer Klappe 20 ansteuern und die andere Leistungsendstufe 1 kann jeweils den anderen Motor 11 der anderen Antriebsstation derselben Klappe 20 ansteuern. Dabei kann je nach Schaltstellung der Schaltteile 2 zu einem Zeitpunkt nur ein Motor von einer Leistungsendstufe 1 angesteuert werden. Vorzugsweise sind nur solche Schaltstellungen der Schaltteile 2 möglich, dass zu einem Zeitpunkt nur Motoren 11 einer Klappe 20 angesteuert werden können. Dadurch wird ein sequenzielles Ansteuern der Klappen 20 ermöglicht und ein gleichzeitiges Ansteuern von mindestens zwei Klappen 20 wird verhindert.

Die Steuerteile 1 und/oder die Schaltteile 2 schalten für ein Aus- oder Einfahren der Klappen 20 derart, dass die Klappen sequenziell, also nacheinander aus- oder einfahren.

Das System aus Fig. 1 weist Einzelstationsantriebe, also einen Antrieb pro Antriebsstation, auf.

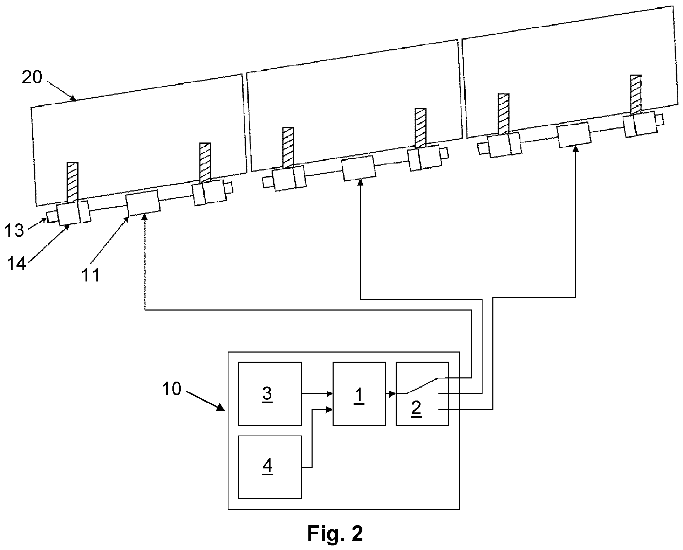

In Fig. 2 ist ein System mit einer Steuereinheit 10 und mehreren Klappen 20, wobei die Klappen 20 Krügerklappen sein können, dargestellt.

Die Steuereinheit 10 weist ein Steuerteil 1 in Form einer Leistungsendstufe und ein Schaltteil 2 in Form eines elektrischen Schalters auf. Die Steuereinheit 10 weist eine zentrale Steuerung 3 und ein Auswerteteil 4 auf.

Das Steuerteil 1 und/oder das Schaltteil 2 werden von der zentralen Steuerung 3 angesteuert oder können angesteuert werden.

An jeder Klappe 20 sind zwei Aktuatoren 14 mit jeweils einer Sensorik 13 angeordnet. Diese Aktuatoren 14 treiben die Klappe an und bewegen diese. Die Aktuatoren 14 werden von einem Motor 11 angetrieben. Pro Klappe 20 ist somit ein Motor 11 und zwei Aktuatoren 14 vorhanden.

Wie dies aus den Verbindungslinien zwischen den Motoren 11 und dem Schaltteil 2 ersichtlich ist, kann die Leistungsendstufe 1 jeweils einen Motor 11 einer Klappe 20 ansteuern. Dabei kann je nach Schaltstellung des Schaltteils 2 zu einem Zeitpunkt nur ein Motor von der Leistungsendstufe 1 angesteuert werden. Dadurch wird ein sequenzielles Ansteuern der Klappen 20 ermöglicht und ein gleichzeitiges Ansteuern von mindestens zwei Klappen 20 wird verhindert.

Das Steuerteil 1 und/oder das Schaltteil 2 schalten für ein Aus- oder Einfahren der Klappen 20 derart, dass die Klappen sequenziell, also nacheinander aus- oder einfahren.

Das System aus Fig. 2 weist Einzelkappenantriebe, also einen Antrieb pro Klappe, auf.

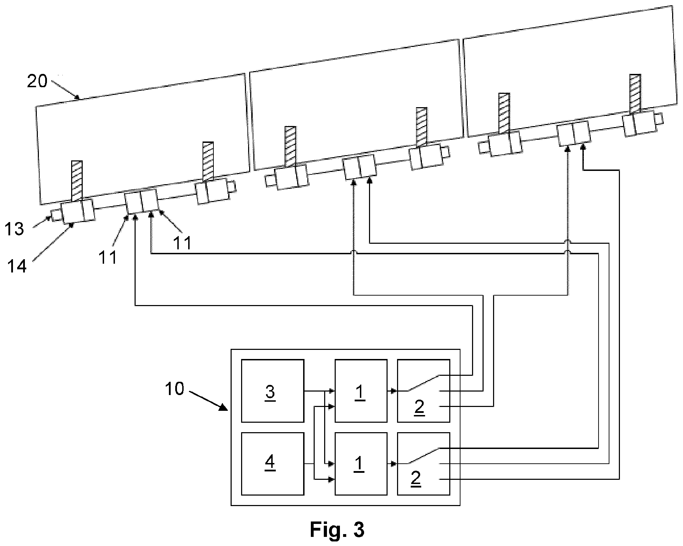

In Fig. 3 ist ein System mit einer Steuereinheit 10 und mehreren Klappen 20, wobei die Klappen 20 Krügerklappen sein können, dargestellt.

Die Steuereinheit 10 weist zwei Steuerteile 1 in Form von Leistungsendstufen und zwei Schaltteile 2 in Form von elektrischen Schaltern auf. Die Steuereinheit 10 weist eine zentrale Steuerung 3 und ein Auswerteteil 4 auf.

Die Steuerteile 1 und/oder die Schaltteile 2 werden von der zentralen Steuerung 3 angesteuert oder können angesteuert werden.

An jeder Klappe 20 sind zwei Aktuatoren 14 mit jeweils einer Sensorik 13 angeordnet. Diese Aktuatoren 14 treiben die Klappe an und bewegen diese. Die Aktuatoren 14 werden von einem Motor 11 angetrieben, wobei an jeder Klappe zwei Motoren 11 zum Antrieb der Aktuatoren 14 vorhanden sind. Pro Klappe 20 sind somit zwei Motoren 11 und zwei Aktuatoren 14 vorhanden.

Das System ist durch die zwei Motoren 11 pro Klappe 20 und die jeweils zwei Steuerteile 1 und Schaltteile 2 redundant ausgeführt.

Wie dies aus den Verbindungslinien zwischen den Motoren 11 und den Schaltteilen 2 ersichtlich ist, kann jede Leistungsendstufe 1 jeweils einen Motor 11 einer Klappe 20 ansteuern. Dabei kann je nach Schaltstellung eines Schaltteils 2 zu einem Zeitpunkt nur ein Motor 11 von einer Leistungsendstufe 1 angesteuert werden. Dabei sind auch solche Schaltstellungen der Schaltteile 2 möglich, dass zu einem Zeitpunkt Motoren 11 verschiedener Klappen 20 durch die zwei Steuerteile 1 angesteuert werden können. Ein sequenzielles Ansteuern der Klappen 20 wird ermöglicht und ein gleichzeitiges Ansteuern von allen Klappen 20 wird verhindert.

Die Steuerteile 1 und/oder die Schaltteile 2 schalten für ein Aus- oder Einfahren der Klappen 20 derart, dass die Klappen sequenziell, also nacheinander aus- oder einfahren.

Das System aus Fig. 3 weist redundante Einzelkappenantriebe, also zwei funktionsgleiche Antriebe pro Klappe, auf.

Das System kann, insbesondere abhängig von den Erfordernissen bezüglich der Zuverlässigkeit des Systems wie auch der Architektur, mit mehreren "motion control engines" (MCE) bzw. Leistungsendstufen ausgerüstet sein.

Es ist denkbar, dass alle Leistungsendstufen in einem Gehäuse integriert sind und von einer gemeinsamen Steuerung angesteuert werden.

Die Leistungsendstufen wie auch die dazu nötige Sensorik der Motoren ist in diesem Falle derart ausgeführt, dass sie mittels eines Schaltteils bzw. elektrischen Schalters mit unterschiedlichen Motoren verbunden werden kann. Somit ist eine Leistungsendstufe in der Lage sequenziell unterschiedliche Motoren anzusteuern.

Denkbar ist, dass nur Teile der nötigen Beschaltung gemeinsam genutzt werden und Teile der Leistungsendstufe einer MCE, wie z.B. Stromsensoren, Leistungsendschalter, Bremsenansteuerung etc. pro anzusteuerndem Motor mehrfach vorhanden sind.

Die genannten Prinzipien können auf hydraulische Systeme gleichermaßen übertragen werden. Denkbar ist, dass bei einem hydraulischen System z.B. Teile der nötigen Sensorik wie z.B. Drucksensoren oder auch elektrohydraulische Servoventile (EHSV) durch die Verwendung von einfachen Umschaltventilen eingespart werden.

Ebenfalls ist die gleichzeitige Auswertung von allen Sensoren bei sequenziell betriebenen Antrieben nicht nötig und ein Auswerteteil in Form einer Auswertelektronik kann ebenfalls umgeschaltet werden.

Die Verwendung einer Signal- und/oder Leistungselektronik bzw. eines Steuerventilblocks die bzw. der sequenziell mehrere Antriebe ansteuert, führt zu einer Optimierung des Systemgewichts, einer Verringerung der Systemkosten, weniger Ressourcenverbrauch, einer höheren Systemverfügbarkeit und es ist flugzeugseitig weniger Bauraum notwendig.

## Patentansprüche

1. Steuereinheit, zur Ansteuerung von mindestens zwei Komponenten eines Luftfahrzeugs, mit einem Steuerteil und einem Schaltteil, **dadurch gekennzeichnet, dass** das Steuerteil und das Schaltteil derart ausgebildet sind, dass die Komponenten sequenziell angesteuert werden können, wobei zu einem Zeitpunkt nur eine der Komponenten angesteuert werden kann oder dass mindestens zwei Komponenten nicht gleichzeitig angesteuert werden können.

2. Steuereinheit nach Anspruch 1 oder 2, **dadurch gekennzeichnet, dass** die Steuereinheit eine elektrische, pneumatische und/oder hydraulische Steuereinheit ist und/oder einen Steuerventilblock und/oder eine Leistungs- und/oder Signalelektronik umfasst oder darstellt.

3. Steuereinheit nach Anspruch 2, **dadurch gekennzeichnet, dass** das Steuerteil ein elektrisches, pneumatisches und/oder hydraulisches Steuerteil ist und/oder ein Pneumatik- und/oder Hydraulikventil und/oder eine Leistungsendstufe umfasst oder darstellt.

4. Steuereinheit nach einem der vorhergehenden Ansprüche, **dadurch gekennzeichnet, dass** das Schaltteil ein elektrisches, pneumatisches und/oder hydraulisches Schaltteil ist und/oder ein Umschaltventil und/oder einen elektrischen Schalter und/oder Umschalter umfasst oder darstellt.

5. Steuereinheit nach einem der vorhergehenden Ansprüche, **dadurch gekennzeichnet, dass** eine, mehrere oder alle der Komponenten einen elektrischen, pneumatischen und/oder hydraulischen Antrieb, insbesondere jeweils zur Bewegung eines Aktuators und/oder einer Klappe des Luftfahrzeugs, umfassen oder darstellen.

6. Steuereinheit nach einem der vorhergehenden Ansprüche, **dadurch gekennzeichnet, dass** die Steuereinheit ein Auswerteteil aufweist, wobei das Auswerteteil vorzugsweise derart ausgebildet ist, dass Sensorsignale einer, mehrerer oder aller der Komponenten empfangen und/oder ausgewertet werden können, wobei zu einem Zeitpunkt nur Sensorsignale einer der Komponenten mit dem Auswerteteil empfangen und/oder ausgewertet werden können oder dass mindestens Sensorsignale von zwei Komponenten nicht gleichzeitig empfangen und/oder ausgewertet werden können.

7. Steuereinheit nach einem der vorhergehenden Ansprüche, **dadurch gekennzeichnet, dass** die Steuereinheit eine zentrale Steuerung aufweist, wobei die zentrale Steuerung derart ausgebildet ist, um das Steuerteil und/oder das Schaltteil anzusteuern.

8. Steuereinheit nach einem der vorhergehenden Ansprüche, **dadurch gekennzeichnet, dass** die Steuereinheit jeweils mehrere, insbesondere jeweils zwei, Steuerteile und/oder Schaltteile aufweist.

9. System mit mehreren Komponenten eines Luftfahrzeugs und einer Steuereinheit nach einem der vorhergehenden Ansprüche.

10. Verfahren, insbesondere unter Verwendung einer Steuereinheit nach einem der Ansprüche, **gekennzeichnet durch** den Schritt:
- Sequenzielles Ansteuern von Komponenten eines Luftfahrzeugs mittels weniger Steuereinheiten als angesteuerter Komponenten und vorzugsweise mittels genau einer Steuereinheit.
